# EUROPÄISCHE PATENTSCHRIFT

(11) **EP 0 881 182 B1**
(45) Veröffentlichungstag und Bekanntmachung des Hinweises auf die Patenterteilung: **13.11.2002**
(21) Anmeldenummer: 98108749.7
(22) Anmeldetag: 14.05.1998
(51) Int. Cl.: B65H 29/02, B65H 29/00

(54) **Versandraum-Transportsystem mit elektrischem Linearantrieb**
Shipping room transport system with electric linear drive
Système de transport d'une salle d'expédition avec entraînement linéaire électrique

(30) Priorität: 28.05.1997 WO PCT/EP97/02750; 14.11.1997 US 970582
(43) Veröffentlichungstag der Anmeldung: 02.12.1998
(73) Patentinhaber: Heidelberger Druckmaschinen Aktiengesellschaft, 69115 Heidelberg (DE)
(72) Erfinder: Abbadessa, Stephan Edward, Dover, NH 03820 (US); Belanger, Roger Robert, Dover, NH 03820 (US); Krüger, Michael, 68535 Edingen-Neckarhausen (DE); Laubscher, Hans-Jörg, 67435 Neustadt-Gimmeldingen (DE)

(56) Entgegenhaltungen:
- WO-A-86/03476
- DE-C- 19 510 281
- US-A- 4 081 723
- US-A- 5 047 676

## Beschreibung

Die Erfindung betrifft ein Versandraum-Transportsystem mit elektrischem Linearantrieb zum Transportieren gefalzter Signaturen in einem Versandraum gemäß dem Oberbegriff des Anspruchs 1. Der Versandraum ist an eine Fertigungsstraße, z. B. eine Rollenrotationsdruckmaschine o. ä. angeschlossen. Im besonderen betrifft die Erfindung ein Transportsystem, in dem die Greifer durch einen elektrischen Linearantrieb individuell angetrieben werden.

Bei der Produktion von Druckprodukten von hoher Qualität, wie z. B. Zeitschriften, Zeitungen oder Magazinen, wird ein Strom von geschnittenen und gefalzten Signaturen von einem Schneide- und Falzabschnitt einer Fertigungsstraße zu einem Versandraum-Abschnitt, z. B. zu einer Binde- oder Hefteinrichtung oder zu einer Zusammentragmaschine zur Weiterverarbeitung transportiert. Der Transport der Signaturen vom Falzabschnitt zum Versandraum erfolgt gewöhnlich durch bekannte Stapler, Paketiervorrichtungen, Aufnehme- oder Wickelvorrichtungen, nachdem die Signaturen gefalzt und von einer laufenden Bahn im Falzabschnitt abgeschnitten worden sind. Die Transportgeschwindigkeit der aus der Schneideinrichtung des Falzabschnitts kommenden Signaturen ist für die unmittelbare Weiterverarbeitung zu hoch, so daß die Signaturen abgebremst werden müssen, um einen Schuppenstrom zu bilden, bevor sie in eines der oben erwähnten Aufnahmesysteme einlaufen.

Von der US 5,452,886 ist bekannt, daß Abbremstrommeln mit sich diskontinuierlich drehenden Greiferarmen verwendet werden, welche die Vorderkante der auf einem Hochgeschwindigkeitsband transportierten Signaturen ergreifen, die Signaturen vom Hochgeschwindigkeitsband abheben und abbremsen und als ein Schuppenstrom auf einem mit niedrigerer Geschwindigkeit laufenden Förderband plazieren. Aufgrund der rotierenden und diskontinuierlichen Bewegung der Greiferarme sind die in US 5,452,886 beschriebenen abgebremsten Signaturen starken Zentrifugalkräften unterworfen, was eine zusätzliche Belastung für die Signaturen bedeutet.

Aus der EP 0 574 703 A1 ist es ferner bekannt, ein Paar rotierender Schaufelräder mit Taschen zu verwenden, in welche die Signaturen direkt von Hochgeschwindigkeitsbändern eingeführt werden, um die Signaturen abzubremsen und sie als ein Schuppenstrom auf einem sich unterhalb der Schaufelräder mit niedrigerer Geschwindigkeit bewegenden Förderband anzuordnen. Das Prinzip der Abbremsung der Signaturen durch deren Einführung in die Schaufelradtaschen erfordert eine hohe Beanspruchung der Signaturen, da die kinetische Energie der Signatur zumindest teilweise von der Signatur selbst absorbiert wird.

Die Patentschrift US 4,081,723 beschreibt ein Versandraumtransportsystem, welches Zeitungsbögen von einem Ort zu einem anderen Ort transportiert. Dazu weist das Transportsystem zwei Schienen auf, auf den Greifern hin und her fahren können und Bögen von einem Ort zum anderen transportieren können. Die Greifer sind jeweils auf einer Art Schlitten montiert, welcher zusammen mit den Schienen einen Linearmotor bildet. Mittels dieses Linearantriebs lassen sich die Schlitten mit den Greifern entlang der Schienen bewegen, um so den Transport der Bögen zu ermöglichen. Desweiteren sind die Schienen in mehrere elektrisch voneinander isolierte Abschnitte unterteilt, so dass Greiferschlitten in unterschiedlichen Schienenabschnitten mit unterschiedlicher Geschwindigkeit betrieben werden können.

In Anbetracht des Standes der Technik und der oben erwähnten Nachteile ist es eine Aufgabe der vorliegenden Erfindung, ein Versandraum-Transportsystem zu schaffen, das eine besonders direkte und präzise Überführung der Signaturen von einem Falzabschnitt einer Druckmaschine in einen nachfolgenden Versandraumabschnitt zur weiteren Verarbeitung, wie Binden, Stapeln, Sortieren o. ä., ermöglicht.

Es ist eine weitere Aufgabe der vorliegenden Erfindung, ein Fördersystem zu schaffen, das eine reibungslose und steuerbare Abbremsung der aus einem Falzabschnitt einer Druckmaschine austretenden Signaturen gewährleistet.

Gemäß einem ersten Ausführungsbeispiel der Erfindung umfasst ein Greifer-Transportsystem zum Transportieren und Verarbeiten eines Stromes von Signaturen in einem Versandraum eine Vielzahl von Greifern, ein Schienensystem für das Führen der Vielzahl von Greifern, ein elektrisches Linearantriebssystem für den individuellen Antrieb der Greifer im Schienensystem und ein mit dem elektrischen Linearantriebssystem verbundenes Steuersystem zum Steuern der Bewegungen der Vielzahl von Greifern im Schienensystem.

Gemäß einer weiteren Ausführung der Erfindung umfaßt das Greifer-Transportsystem für das Transportieren der Signaturen zu den Greifern ein oder mehrere Hochgeschwindigkeitsbänder, die parallel zueinander und hinter einem Falzabschnitt der Druckmaschine angeordnet sind und die im wesentlichen mit der Geschwindigkeit der Druckmaschine angetrieben werden. Das Schienensystem kann relativ zu den Hochgeschwindigkeitsbändern so angeordnet sein, daß die Greifer zur Übernahme der Signaturen in zwischen den Hochgeschwindigkeitsbändern gebildete Spalte eintauchen, wenn diese entlang des Schienensystems fortbewegt werden.

Nach einer weiteren Ausführung der Erfindung steuert das Steuersystem die Bewegung der Greifer nach deren Eintauchen in die Spalte zwischen den Hochgeschwindigkeitsbändern in der Weise, daß die Geschwindigkeit eines jeden Greifers solange erhöht wird, bis dieser die Hinterkante einer Signatur ergriffen hat.

Gleichermaßen kann das Steuersystem die Bewegung der Greifer nach deren Eintauchen in die Spalte zwischen den Hochgeschwindigkeitsbändern so steuern, daß die Geschwindigkeit eines jeden Greifers verringert wird, bis dieser die Vorderkante einer Signatur ergriffen hat. Ferner kann ein erster Greifer die Vorderkante und ein folgender Greifer die Hinterkante einer Signatur ergreifen, so daß die Signatur von zwei Greifern gleichzeitig transportiert wird, wobei der eine die Vorderkante und der andere die Hinterkante der Signatur hält.

In einem anderen Ausführungsbeispiel der Erfindung befindet sich stromabwärts der Hochgeschwindigkeitsbänder eine Auslagestation, zu der die Signaturen von den Greifern transportiert werden; und zwischen den Hochgeschwindigkeitsbändern und der Auslagestation ist ein erster Transportabschnitt festgelegt. Hier verringert das Steuersystem die Geschwindigkeit der Greifer bei deren Bewegung entlang des ersten Transportabschnitts, so daß ein Strom von einander überlappenden Signaturen gebildet wird, wenn diese auf ein langsamer laufendes weiteres Transportband in der Auslagestation übertragen werden.

Nach einer weiteren Ausführung der Erfindung ist hinter dem ersten Transportabschnitt ein zweiter Transportabschnitt vorgesehen, in welchem das Schienensystem nach oben verläuft, die Greifer sich mit verringerter Geschwindigkeit bewegen und einen geringen Abstand voneinander haben.

Demgemäß kann ein dritter Transportabschnitt zwischen dem Ende des zweiten Transportabschnitts und den Hochgeschwindigkeitsbändern festgelegt sein, in welchem das Schienensystem schräg nach unten verläuft - in Bewegungsrichtung der Greifer gesehen -, so daß sich die Greifer frei und nur durch ihr Eigengewicht angetrieben nach unten in den dritten Transportabschnitt bewegen können, ohne daß eine zusätzliche Antriebskraft von außen anzuwenden wäre.

In einem weiteren Ausführungsbeispiel umfaßt das Linearantriebssystem eine Vielzahl von elektromagnetischen Spulen, die entlang des Schienensystems angeordnet und mit einem zugeordneten Mikro-Kontroller verbunden sind, und zwar über einen Digital-Analog-Wandler und einen eine Wheatstoneschen Brückenschaltung aufweisenden elektrischen Schaltkreis in der Weise, daß das elektromagnetische Feld einer jeden Spule, insbesondere im Übergabeabschnitt und im ersten Transportabschnitt, durch das Steuersystem individuell gesteuert werden kann.

Nach einem weiteren Ausführungsbeispiel der Erfindung kann das Steuersystem einen ersten Sensor für das Abtasten der Bewegung der Greifer im Schienensystem und einen zweiten Sensor für das Abtasten der Bewegung der von den Greifern entlang des Schienensystems transportierten Signaturen umfassen. Der zweite Sensor kann sich vorzugsweise in der Nähe der Hochgeschwindigkeitsbänder befinden und einen Fotodetektor und eine damit verbundene Lichtquelle umfassen, die Licht auf den Fotodetektor richtet, wobei der Fotodetektor und die Lichtquelle so angeordnet sind, daß die Signaturen zwischen der Lichtquelle und dem Fotodetektor hindurch transportiert werden. Das Steuersystem kann ferner einen Analog-Digital-Wandler umfassen, der die Signale des ersten und/oder zweiten Sensors in digitale Signale umwandelt, die dem Master-Kontroller zugeführt werden können. Der Master-Kontroller reguliert und steuert wiederum die elektromagnetischen Spulen über die Mikro-Kontroller zum Beschleunigen oder Abbremsen der Greifer im Schienensystem.

Das elektrische Linearantriebssystem kann auf dem Prinzip eines beliebigen der bekannten elektrischen Linearantriebssysteme basieren und beispielsweise ein synchrones oder ein asynchrones Antriebssystem sein.

Nach einem weiteren Ausführungsbeispiel der Erfindung können die Greifer mit Magneten versehen sein oder zumindest teilweise aus einem magnetischen Material bestehen und können Teil eines Nutzbremssystems sein, wobei die Greifer ihre kinetische Energie zurückgewinnen, wenn diese abgebremst werden.

Die Merkmale und Vorteile der vorliegenden Erfindung werden in der folgenden Beschreibung im Zusammenhang mit den beigefügten, nachstehend erklärten Zeichnungen näher erläutert.

Es zeigen:
- Fig. 1: eine schematische Übersicht eines Transportsystems nach einem Ausführungsbeispiel der vorliegenden Erfindung;
- Fig. 2: eine detaillierte Ansicht eines Übergabeabschnitts des Transportsystems nach einem Ausführungsbeispiel der Erfindung, in welchem die Signaturen von den Hochgeschwindigkeitsbändern auf die Greifer übertragen werden;
- Fig. 3: eine detaillierte Ansicht des ersten Transportabschnitts des Transportsystems gemäß einem Ausführungsbeispiel der Erfindung, in welchem die die Signaturen tragenden Greifer abgebremst werden; und
- Fig. 4: ein schematisches Diagramm der elektrischen Schaltung des erfindungsgemäßen Steuersystems zum Steuern der Bewegung der Greifer im Schienensystem.

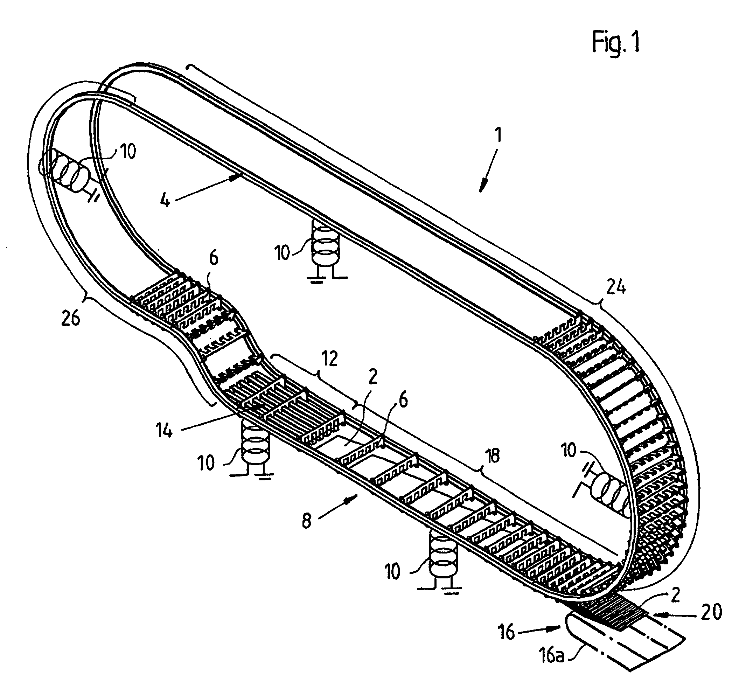

Wie in Fig. 1 gezeigt, umfaßt ein Greifertransportsystem 1 für den Transport und das Handhaben eines Stromes von Signaturen 2, die in einer nicht gezeigten Druckmaschine, z. B. einer Rollenrotationsdruckmaschine, gedruckt und in einem nicht gezeigten Falzapparat geschnitten und gefalzt worden sind, ein Schienensystem 4, in welchem eine Vielzahl von Greifern 6 geführt wird. Die Greifer 6 werden in dem Schienensystem 4 mittels eines elektrischen Linearantriebs 8, der durch elektromagnetische Spulen 10 schematisch angedeutet ist, einzeln und vorzugsweise unabhängig voneinander angetrieben.

In einem Übergabeabschnitt 12 des Schienensystems 4 übernehmen die Greifer 6 die Signaturen 2 von Hochgeschwindigkeitsbändern 14, welche die Signaturen z. B. aus einem stromaufwärts angeordneten Falzabschnitt der Druckmaschine zum Übergabeabschnitt 12 transportieren. Wie aus Fig. 1 zu ersehen ist, befindet sich eine Auslagestation 16, zu der die Signaturen 2 durch die Greifer 6 transportiert werden, stromabwärts der Hochgeschwindigkeitsbänder 14, und die Strecke zwischen den Hochgeschwindigkeitsbändern 14 und der Auslagestation 16 wird als erster Transportabschnitt 18 bezeichnet. Die Auslagestation 16 kann ein herkömmliches Transportband oder ein Transportriemen 16a des Standes der Technik sein, wie in Fig. 1 in strichpunktierten Linien schematisch angedeutet ist. Das Transportband 16a kann mit einer Geschwindigkeit, die wesentlich niedriger als die Geschwindigkeit der Hochgeschwindigkeitsbänder 14 ist, angetrieben werden, so daß die Signaturen 2 im ersten Transportabschnitt 18 abgebremst werden können, um einen Schuppenstrom 20 von überlappenden Signaturen 2 zu bilden, nachdem diese auf das Transportband 16a übertragen worden sind.

In dieser Ausführung der Erfindung ist das Greifertransportsystem 1 vorzugsweise zum Abbremsen der die Hochgeschwindigkeitsbänder 14 verlassenden Signaturen 2 ausgebildet, um die Signaturen 2 auf dem Transportband 16a zu einem Schuppenstrom zu formieren. In gleicher Weise kann das Greifertransportsystem 1 der vorliegenden Erfindung jedoch ebenfalls für den direkten Transport der Signaturen 2 zu einem nachfolgenden Versandraum-Abschnitt, z. B. zu einer nicht gezeigten Zusammentragmachine, Sortiermaschine, einem Stapler, einer Binderei o. ä., eingesetzt werden und ist nicht auf die beschriebenen oder in den Zeichnungen gezeigten Ausführungsbeispiele beschränkt.

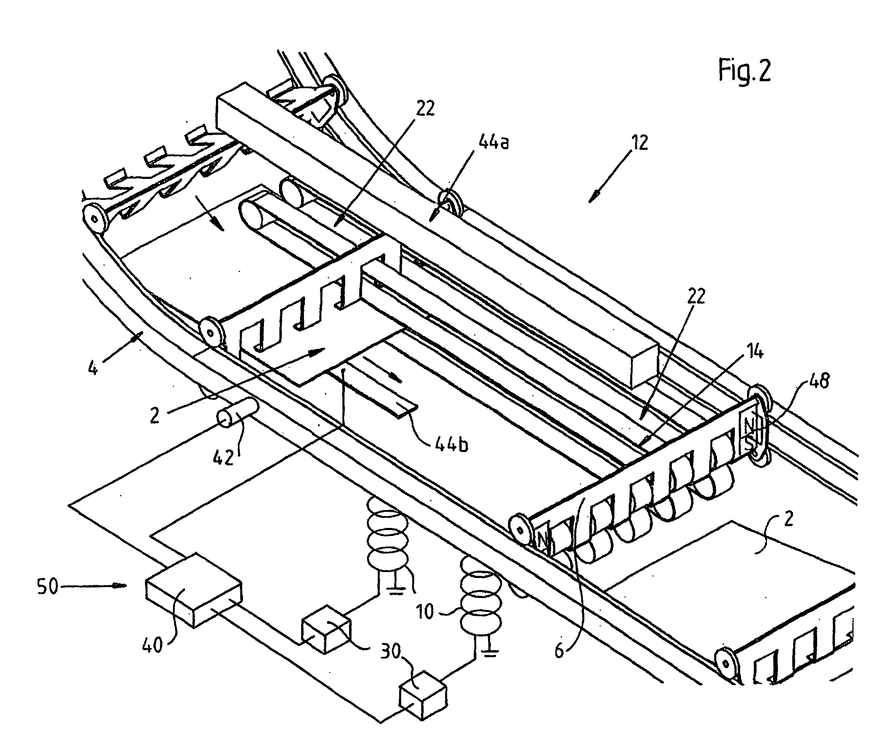

Wie in Fig. 2 im Detail zu sehen ist, können die Hochgeschwindigkeitsbänder 14 parallel zueinander angeordnet sein, so daß sich Spalten oder Zwischenräume 22 zwischen zwei nebeneinanderliegenden Bändern 14 ergeben. Im Übergabeabschnitt 12 ist das Schienensystem 4 in der Weise ausgestaltet und relativ zu den Hochgeschwindigkeitsbändern 14 angeordnet, daß die Greifer 6 in die Zwischenräume 22 zwischen den Bändern 14 eintauchen, wenn sie entlang des Übergabeabschnitts 12 des Schienensystems 4 fortbewegt werden. Nachdem die Greifer 6 in die Zwischenräume 22 eingetaucht sind, wird die Geschwindigkeit eines jeden Greifers 6 durch das im folgenden näher beschriebene Steuersystem 50 reduziert, bis die Vorderkante der Signatur 2 von dem Greifer 6 ergriffen werden kann. Dann wird der Greifer 6 z. B. durch einen bekannten Betätigungsmechanismus, wie eine Welle und eine Kurvenrolle, ein Elektromagnet oder eine andere bekannte, nicht gezeigte Betätigungseinrichtung aktiviert und ergreift die Vorderkante der Signatur 2.

Gemäß einer weiteren Ausführung der Erfindung können die Greifer 6 bezüglich ihrer Bewegungsrichtung auch eine unterschiedliche Orientierung haben und die Signaturen 2 an deren Hinterkante ergreifen. Bei dieser Ausführung wird die Geschwindigkeit eines jeden Greifers 6 nach dessen Eintauchen in den zugehörigen Zwischenraum 22 hinter der Signatur 2 durch das Steuersystem 50 solange erhöht, bis sich der Greifer in Höhe der Hinterkante der Signatur befindet und durch Aktivieren des Greifers 6 in der oben beschriebenen Weise die Hinterkante der Signatur 2 ergreift.

Weiterhin kann ein erster Greifer 6 die Vorderkante einer Signatur 2 und ein nachfolgender Greifer 6 die Hinterkante der gleichen Signatur 2 ergreifen, so daß die Signatur von zwei Greifern gleichzeitig transportiert werden kann, wobei einer die Vorderkante und der andere die Hinterkante der gleichen Signatur 2 hält.

Nachdem ein Greifer 6 die Vorderkante der Signatur 2 ergriffen hat, steuert das Steuersystem 50 die Bewegung des Greifers 6 im Übergabeabschnitt 12 des Schienensystems 4 vorzugsweise in der Weise, daß sich der Greifer 6 mit im wesentlichen der gleichen Geschwindigkeit wie die Hochgeschwindigkeitsbänder 14 bewegt, bis die Signatur 2 von den Hochgeschwindigkeitsbändern 14 vollständig freigegeben ist.

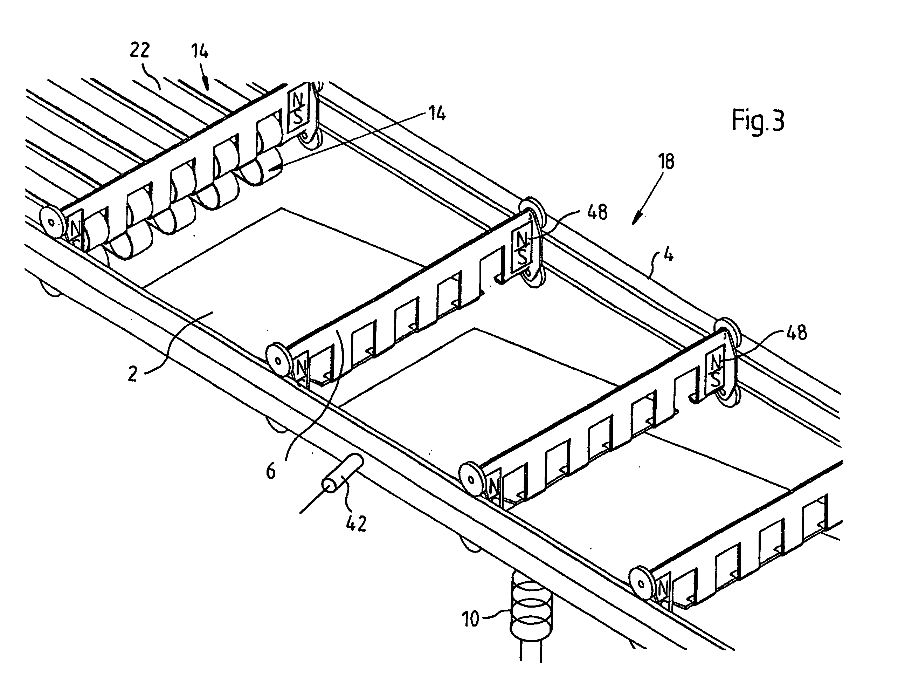

Wenn die Greifer in den ersten Transportabschnitt 18 eintreten, können diese durch das Steuersystem 50 abgebremst werden, wie dies in den Fig. 1 und 3 durch die sich verringernden Abstände zwischen zwei aufeinanderfolgenden Greifern 6 angedeutet ist.

Nachdem die Greifer 6 die Signaturen 2 abgelegt oder diese an ein Transportband 16a in der Auslagestation 16 übergeben haben, treten die Greifer 6 in einen sich stromabwärts der Auslagestation 16 befindlichen zweiten Transportabschnitt 24 ein (in Bewegungsrichtung der Greifer 6 gesehen). Im zweiten Transportabschnitt 24 erstreckt sich das Schienensystem 4 im wesentlichen nach oben und die Greifer 6 bewegen sich mit verringerter Geschwindigkeit und können nahe aneinander oder sogar in Kontakt miteinander sein. Ferner kann ein weiteres Hilfsantriebssystem im zweiten Transportabschnitt 24 vorgesehen sein, wie z. B. ein bekannter Kettenantrieb o. ä., der die Greifer kontaktiert und diese entlang des Schienensystems 4 im zweiten Transportabschnitt 24 nach oben bewegt. Bei dieser Ausführung der Erfindung kann auf die elektromagnetischen Spulen 10 des elektrischen Linearantriebssystems 8 verzichtet werden, oder diese können mindestens zum Teil durch ein kostengünstigeres Hilfsantriebssystem ersetzt werden.

Wie in Fig. 1 zu ersehen ist, kann zwischen dem Ende des zweiten Transportabschnitts 24 und dem Übergabeabschnitt 12 ein dritter Transportabschnitt 26 vorgesehen sein, in welchem das Schienensystem 4 in Bewegungsrichtung der Greifer 6 gesehen schräg nach unten verläuft, so daß die Greifer 6 nur durch Schwerkraft und ohne Anwendung einer äußeren Antriebskraft bewegt werden. Somit ist es nicht notwendig, entlang des Schienensystems 4 im dritten Transportabschnitt 26 elektromagnetische Spulen 10 anzuordnen, um die Greifer 6 entlang des dritten Transportabschnitts 26 fortzubewegen, obschon die zusätzliche Verwendung solch elektromagnetischer Spulen 10 vorteilhaft sein kann.

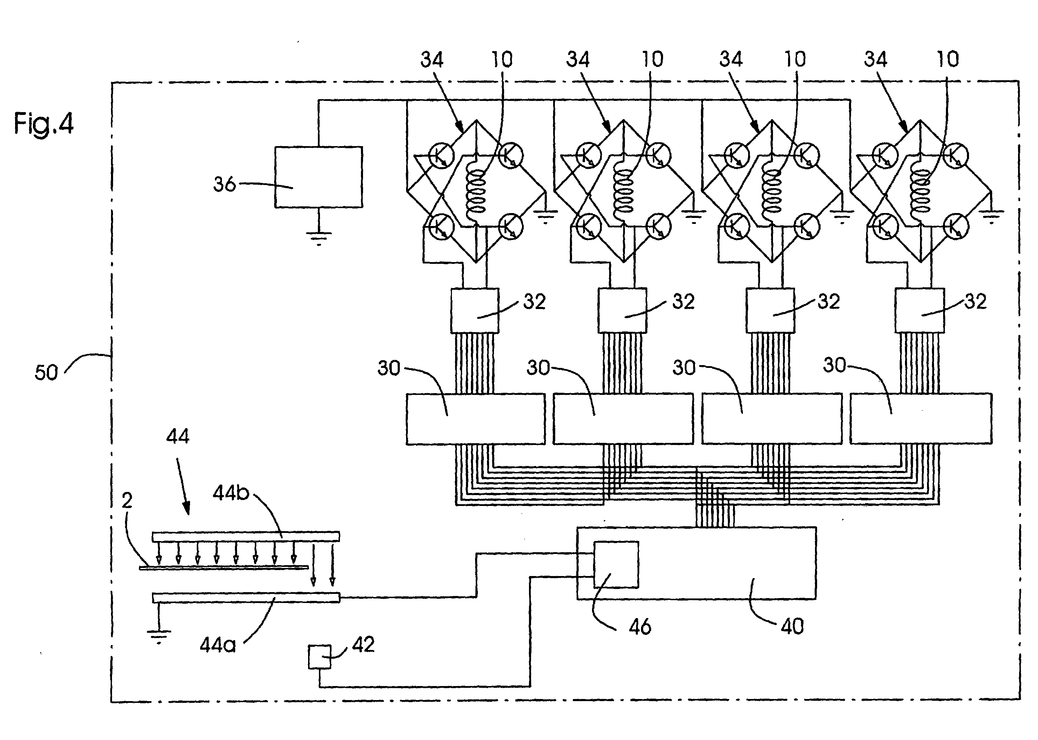

Gemäß einer weiteren Ausführungsform der Erfindung umfaßt das Linearantriebssystem 8 eine Vielzahl von elektromagnetischen Spulen 10, die aus darstellungstechnischen Gründen nur als eine Spule 10 in einem jeweiligen Abschnitt 12, 18, 24 schematisch dargestellt ist. Wie in Fig. 4 im Detail gezeigt ist, ist jede der Spulen 10 über einen Digital-Analog-Wandler 32 und eine eine Wheatstonesche Brückenschaltung aufweisende elektrische Schaltung 34 mit einem zugeordneten Mikro-Kontroller 30 verbunden. Die Wheatstonesche Brückenschaltung kann ferner Paare von Transistoren umfassen, die mit einer Gleichstromquelle 36 und mit dem entsprechenden Digital-Analog-Wandler 32 elektrisch verbunden sind.

Jeder der Mikro-Kontroller 30 kann über eine parallele Datenschnittstelle und einen parallelen Bus mit einem Master-Kontroller 40 verbunden werden, wie in Fig. 4 angedeutet ist. Der Master-Kontroller 40 kann Greiferpositionssignale von einem ersten Sensor 42 und/oder Signaturpositionssignale von einem zweiten Sensor 44 empfangen. Der erste und/oder der zweite Sensor 42 und 44 kann mit dem Master-Kontroller 40 verbunden sein, und zwar über einen bekannten Analog-Digital-Wandler 46, der die analogen Signale der Sensoren 42, 44 in digitale Signale zur weiteren Verarbeitung durch den Master-Kontroller 40 umwandelt.

Der erste Sensor 42 kann beispielsweise ein bekannter Näherungsschalter sein, der direkt am Schienensystem 4 angebracht ist, wie dies in Fig. 2 schematisch angedeutet ist.

Der zweite Sensor 44 kann hingegen einen Fotodetektor 44a und eine zugeordnete Lichtquelle 44b, die Licht auf den Fotodetektor 44a richtet, umfassen. Wie in Fig. 2 gezeigt ist, sind der Fotodetektor 44a und die Lichtquelle 44b derart angeordnet, daß die Signaturen 2 zwischen der Lichtquelle und dem Fotodetektor transportiert werden. In dieser Ausführung der Erfindung entspricht die Amplitude des von dem Fotodetektor 44a ausgegebenen Signals der Position der Vorderkante einer Signatur relativ zum Detektor 44a, und die Geschwindigkeit einer Signatur 2 ist proportional zur ersten Abweichung des Signals, oder mit anderen Worten, proportional zur Zunahme oder Abschwächung des Signals in einem bestimmten Zeitraum.

In Abhängigkeit von den Signalen des ersten und/oder des zweiten Sensors 42, 44 erzeugt der Master-Kontroller 40 Signale, die an den jeweiligen Mikro-Kontroller 30 gesandt werden, der wiederum die Polariät und/oder Amplitude und/oder den Wechselstrom-Phasenwinkel der Spannung oder des elektrischen Stroms, der jeder elektromagnetischen Spule 10 in Abhängigkeit von der Position und/oder der Geschwindigkeit der Signaturen 2 oder der Greifer 6 zugeführt wird, steuert und regelt.

Indem ein zentraler Master-Kontroller 40 und zwei oder mehrere mit jeder Spule 10 verbundene unabhängige Mikro-Kontroller 30 verwendet werden, ist es möglich, jeden Greifer 6 mit einer variablen Beschleunigungskraft zu beaufschlagen, so daß dieser beim Ergreifen der Vorderkante und/oder der Hinterkante einer Signatur 2 entsprechend positioniert werden kann. Ferner ergibt sich durch die Verwendung unabhängiger Mikro-Kontroller 30 auch eine kürzere Reaktionszeit des Steuersystems 50, einschließlich der Spulen 10, der Mikro-Kontroller 30, der Digital-Analog-Wandler 32, der elektrischen Schaltungen 34, des Master-Kontrollers 40 und des ersten und/oder zweiten Sensors 42 und 44, da der Master-Kontroller 40 freigehalten wird, um nur System-Management-Aufgaben und Aufgaben der Erfassung externer Daten auszuführen.

Das elektrische Linearantriebssystem 8 der vorliegenden Erfindung kann ein beliebiges herkömmliches, beispielsweise ein synchron oder ein asynchron arbeitendes Antriebssystem des Standes der Technik sein.

Nach einem weiteren Ausführungsbeispiel der Erfindung können die Greifer 6 mit Magneten 48 versehen sein oder können zumindest teilweise aus einem magnetischen Material bestehen. Bei dieser Ausführungsform der Erfindung kann es vorgesehen sein, daß die kinetische Energie der Greifer 6 beim Abbremsen derselben durch ein regeneratives Bremssystem oder eine Energierückgewinnungseinrichtung zurückgewonnen wird. Das regenerative Bremssystem kann z. B. auf dem Induktionsprinzip basieren und die in den elektromagnetischen Spulen 10 von den an diesen vorbeigeführten Magneten 48 erzeugten Induktionsströme verwenden, die die Bremskräfte zum Abbremsen der Greifer 6 erzeugen.

### LISTE DER BEZUGSZEICHEN

- 1: Greifertransportsystem
- 2: Signaturen
- 4: Schienensystem
- 6: Greifer
- 8: elektrischer Linearantrieb
- 10: elektromagnetische Spulen
- 12: Übergabeabschnitt
- 14: Hochgeschwindigkeitsbänder
- 16: Auslagestation
- 16a: Transportband
- 18: erster Transportabschnitt
- 20: Schuppenstrom von Signaturen
- 22: Spalt zwischen den Bändern 14
- 24: zweiter Transportabschnitt
- 26: dritter Transportabschnitt
- 30: Mikro-Kontroller
- 32: Digital-Analog-Wandler
- 34: elektrische Schaltung
- 36: Gleichstromquelle
- 40: Master-Kontroller
- 42: erster Sensor
- 44: zweiter Sensor
- 44a: Fotodetektor
- 44b: Lichtquelle
- 46: Analog-Digital-Wandler
- 48: Magnete
- 50: Steuersystem

## Patentansprüche

1. Versandraum-Transportsystem zum Transportieren eines Stromes von Signaturen in einem Versandraum, welches die folgenden Merkmale umfasst:
eine Vielzahl von Greifern (6);
ein Schienensystem (4) zum Führen der Vielzahl von Greifern (6);
ein elektrisches Linearantriebssystem (8) für den individuellen Antrieb der Greifer (6) im Schienensystem (4);
ein Steuersystem (50), das zum individuellen Steuern der Bewegung der Vielzahl von Greifern (6) im Schienensystem (4) mit dem Linearantriebssystem (8) verbunden ist; Hochgeschwindigkeitsbänder (14) zum Transportieren der Signaturen (2) zu den Greifern (6),
**dadurch gekennzeichnet,**
**dass** das Schienensystem (4) bezüglich der Hochgeschwindigkeitsbänder (14) in der Weise angeordnet ist, dass die Greifer (6) in zwischen den Hochgeschwindigkeitsbändern (14) gebildete Spalte (22) eintauchen, während die Greifer (6) entlang des Schienensystems (4) fortbewegt werden.

2. Vorrichtung nach Anspruch 1,
**dadurch gekennzeichnet,**
**dass** das Steuersystem (50) die Bewegung der Greifer (6) nach deren Eintauchen in die Spalte (22) zwischen den Hochgeschwindigkeitsbändern (14) in der Weise steuert, dass die Geschwindigkeit eines jeden Greifers (6) erhöht wird, bis dieser die Hinterkante einer Signatur (2) ergriffen hat.

3. Vorrichtung nach Anspruch 2,
**dadurch gekennzeichnet,**
**dass** das Steuersystem (50) die Geschwindigkeit der Greifer (6) verringert, nachdem diese die Signaturen (2) an ihrer Hinterkante ergriffen haben.

4. Vorrichtung nach Anspruch 1,
**dadurch gekennzeichnet,**
**dass** das Steuersystem (50) die Bewegung der Greifer (6) nach deren Eintauchen in die Spalten zwischen den Hochgeschwindigkeitsbändern (14) in der Weise steuert, dass die Geschwindigkeit eines jeden Greifers (6) verringert wird, bis dieser die Vorderkante einer Signatur (2) ergriffen hat.

5. Vorrichtung nach Anspruch 4,
**dadurch gekennzeichnet,**
**dass** die Geschwindigkeit der Greifer (6) in der Weise verringert wird, dass diese unterhalb der Geschwindigkeit der Hochgeschwindigkeitsbänder (14) liegt, nachdem die Greifer (6) die Signaturen (2) an ihrer jeweiligen Vorderkante ergriffen haben.

6. Vorrichtung nach einem der Ansprüche 1 bis 5,
**dadurch gekennzeichnet,**
**dass** eine Auslagestation (16), zu welcher die Signaturen (2) von den Greifern (6) transportiert werden, stromwärts der Hochgeschwindigkeitsbänder (14) angeordnet ist.

7. Vorrichtung nach Anspruch 6,
**dadurch gekennzeichnet,**
**dass** das Steuersystem (50) die Geschwindigkeit der Greifer (6) während deren Fortbewegung entlang eines ersten zwischen den Hochgeschwindigkeitsbändern (14) und der Auslagestation (16) gelegenen Transportabschnitts (18) verringert.

8. Vorrichtung nach Anspruch 7,
**dadurch gekennzeichnet,**
**dass** sich stromabwärts des ersten Transportabschnitts (18) ein zweiter Transportabschnitt (24) befindet, in dem das Schienensystem (4) in der Weise angeordnet ist, dass die Greifer (6) während ihrer Fortbewegung entlang des zweiten Transportabschnitts (24) aufwärts bewegt werden.

9. Vorrichtung nach Anspruch 8,
**dadurch gekennzeichnet,**
**dass** sich zwischen dem zweiten Transportabschnitt (24) und den Hochgeschwindigkeitsbändern (14) ein dritter Transportabschnitt (26) befindet, in dem sich das Schienensystem (4) - in Bewegungsrichtung der Greifer gesehen - schräg nach unten erstreckt, in der Weise, dass die Greifer (6) entlang des dritten Transportabschnitts (26) durch Schwerkraft fortbewegt werden.

10. Vorrichtung nach einem der vorhergehenden Ansprüche,
**dadurch gekennzeichnet,**
**dass** das Linearantriebssystem (8) eine Vielzahl von elektromagnetischen Spulen (10) umfasst, die entlang des Schienensystems (4) angeordnet und durch das Steuersystem (50) individuell steuerbar sind.

11. Vorrichtung nach Anspruch 10,
**dadurch gekennzeichnet,**
**dass** die Greifer (6) mit Magneten versehen sind, die für den Antrieb der Greifer (6) mit dem durch die elektromagnetischen Spulen (10) erzeugten elektromagnetischen Feld zusammenwirken.

12. Vorrichtung nach Anspruch 10 oder 11,
**dadurch gekennzeichnet,**
**dass** das Steuersystem (50) eine Vielzahl von Mikro-Kontrollern (30) umfasst, von denen ein jeder einer der elektromagnetischen Spulen zugeordnet ist, und dass ein Master-Kontroller (40) vorgesehen ist, der die Vielzahl von Mikro-Kontrollern (30) steuert.

13. Vorrichtung nach Anspruch 12,
**dadurch gekennzeichnet,**
**dass** jeder der Mikro-Kontroller (30) über einen Digital-Analog-Wandler (32) und eine eine Wheatstonesche Brückenschaltung aufweisende elektrische Schaltung mit den elektromagnetischen Spulen (10) verbunden ist.

14. Vorrichtung nach Anspruch 13,
**dadurch gekennzeichnet,**
**dass** die Weatstonesche Brückenschaltung ein Transistorenpaar umfasst, das mit einer Gleichstromquelle (36) und dem Digital-Analog-Wandler (32) elektrisch verbunden ist.

15. Vorrichtung nach einem der vorhergehenden Ansprüche,
**dadurch gekennzeichnet,**
**dass** das Steuersystem (50) einen ersten Sensor (42) zum Erfassen der Bewegung der Greifer (6) in dem Schienensystem (4) umfasst.

16. Vorrichtung nach einem der vorhergehenden Ansprüche,
**dadurch gekennzeichnet,**
**dass** das Steuersystem (50) einen zweiten Sensor (44) zum Erfassen der Bewegung der Signaturen (2) umfasst.

17. Vorrichtung nach Anspruch 16,
**dadurch gekennzeichnet,**
**dass** das Steuersystem (50) auf der Basis eines Outputs des zweiten Sensors (44) ein Signaturpositionssignal erzeugt.

18. Vorrichtung nach Anspruch 17,
**dadurch gekennzeichnet,**
**dass** das Steuersystem (50) auf der Basis eines Outputs des zweiten Sensors (44) ein Signatur-Geschwindigkeitssignal erzeugt.

19. Vorrichtung nach einem der Ansprüche 16 bis 18,
**dadurch gekennzeichnet,**
**dass** der zweite Sensor (44) einen Fotodetektor (44a) und eine zugeordnete Lichtquelle (44b), die Licht auf den Fotodetektor (44a) richtet, umfasst, wobei der Fotodetektor (44a) und die Lichtquelle (44b) in der Weise angeordnet sind, dass die Signaturen (2) zwischen dem Fotodetektor und der Lichtquelle (44b) hindurchtransportiert werden.

20. Vorrichtung nach einem der Ansprüche 16 bis 19,
**dadurch gekennzeichnet,**
**dass** das Steuersystem (50) einen Analog-Digital-Wandler (46) umfasst, der die von dem zweiten Sensor (44) ausgegebenen Signale in digitale Signale umsetzt.

21. Vorrichtung nach einem der vorhergehenden Ansprüche,
**dadurch gekennzeichnet,**
**dass** das elektrische Linearantriebssystem (8) ein synchrones Antriebssystem ist.

22. Vorrichtung nach einem der Ansprüche 1 bis 20,
**dadurch gekennzeichnet,**
**dass** das elektrische Linearantriebssystem (8) einasynchrones Antriebssystem ist.

23. Vorrichtung nach einem der Ansprüche 11 bis 22,
**dadurch gekennzeichnet,**
**dass** das Steuersystem (50) ein Energierückgewinnungssystem umfasst, das die durch die Magnete in den Spulen (169 erzeugte elektrische Energie beim Abbremsen der Greifer (6) zurückgewinnt.

## Claims

1. Mailroom conveyor system for transporting a stream of signatures in a mailroom which comprises the following features:
a plurality of grippers (6);
a rail system (4) for guiding the plurality of grippers (6); an electric linear drive system (8) for individually driving the grippers (6) in the rail system (4);
a control system (50) connected to the linear drive system (8) for individually controlling the movement of the plurality of grippers (6) in the rail system (4);
high speed tapes (14) for transporting the signatures (2) to the grippers (6),
**characterized in**
**that** the rail system (4) relative to the high speed tapes (14) is arranged such that the grippers (6) dive into gaps (22) formed between the high speed tapes (14), while the grippers (6) are advanced along the rail system (4).

2. Apparatus according to claim 1
**characterized in**
**that** the control system (50) controls the movement of the grippers (6) after the grippers have entered the gaps (22) between the high speed tapes (14) such that the speed of each gripper (6) is increased until a trailing edge of a signature (2) is gripped by the gripper.

3. Apparatus according to claim 2,
**characterized in**
**that** the control system (50) decreases the speed of the grippers (6) after the grippers have gripped the signatures (2) at their trailing edge.

4. Apparatus according to claim 1,
**characterized in**
**that** the control system (50) controls the movement of the grippers (6) after the grippers have entered the gaps between the high speed tapes (14) such that the speed of each gripper (6) is reduced until a leading edge of a signature (2) is gripped by the gripper.

5. Apparatus according to claim 4,
**characterized in**
**that** the speed of the grippers (6) is decreased below the speed of the transport tapes (14) after the grippers (6) have gripped the signatures (2) at their respective leading edge.

6. Apparatus according to one of claims 1 to 5,
**characterized in**
**that** a delivery station (16) to which the signatures (2) are transported by the grippers (6) is defined downstream of the high speed tapes (14).

7. Apparatus according to claim 6,
**characterized in**
**that** the control system (50) decreases the speed of the grippers (6) while they are advanced along a first transport section (18) defined between the high speed tapes (14) and the delivery station (18).

8. Apparatus according to claim 7,
**characterized in**
**that** a second transport section (24) is defined downstream of the first transport section (18), in which the rail system (4) is arranged such that the grippers (6) are moved upwardly when advancing along the second transport section (24).

9. Apparatus according to claim 8,
**characterized in**
**that** a third transport section (26) is defined between the second transport section (24) and the high speed tapes (14), wherein the rail system (4) is downwardly inclined - when viewed in the traveling direction of the grippers - such that the grippers (6) are advanced by gravity along the third transport section (26).

10. Apparatus according to one of the preceding claims
**characterized in**
**that** the linear drive system (8) comprises a variety of electromagnetic coils (10), which are arranged along the rail system (4) and which are individually controllable by the control system (50).

11. Apparatus according to claim 10,
**characterized in**
**that** the grippers (6) include magnets interacting with the electromagnetic field generated by the electromagnetic coils (10) for driving the grippers (6).

12. Apparatus according to claims 10 or 11,
**characterized in**
**that** the control system (50) includes a variety of micro-controllers (30), each of which being associated with one of the electromagnetic coils and that a master controller (40) is provided for controlling the variety of micro-controllers (30).

13. Apparatus according to claim 12,
**characterized in**
**that** each of the micro-controllers (30) is coupled to the electromagnetic coils (10) via a digital-to-analog-converter (32) and an electric circuit including a wheatstone bridge.

14. Apparatus according to claim 13,
**characterized in**
**that** the wheatstone bridge comprises a pair of transistors electrically coupled to a DC-power supply (36) and the digital-to-analog-converter (32).

15. Apparatus according to one of the preceding claims,
**characterized in**
**that** the control system (50) includes a first sensor (42) for sensing the movement of the grippers (6) in the rail system (4).

16. Apparatus according to one of the preceding claims, **characterized in**
**that** the control system (50) includes a second sensor (44) for sensing the movement of the signatures (2).

17. Apparatus according to claim 16,
**characterized in**
**that** the control system (50) generates a signature position signal on the basis of an output of the second sensor (44).

18. Apparatus according to claim 17,
**characterized in**
**that** the control system (50) generates a signature speed signal on the basis of an output of the second sensor (44).

19. Apparatus according to one of claims 16 to 18,
**characterized in**
**that** the second sensor (44) includes a photo detector (44a) and an associated light source (44b) directing light onto the photo detector (44a), whereby the photo detector (44a) and the light source (44b) are arranged such that the signatures (2) are transported between the photo detector and the light source (44b).

20. Apparatus according to one of claims 16 to 19,
**characterized in**
**that** the control system (50) includes an analog-to-digital converter (46) for converting signals provided by the second sensor (44) into digital signals.

21. Apparatus according to one of the preceding claims,
**characterized in**
**that** the electric linear drive system (8) is a synchronous drive system.

22. Apparatus according to one of claims 1 to 20,
**characterized in**
**that** the electric linear drive system (8) is an asynchronous drive system.

23. Apparatus according to one of claims 11 to 22,
**characterized in**
**that** the control system (50) includes an energy regeneration system for regenerating electric energy induced in the coils by the variety of magnets when decelerating the grippers (6).

## Revendications

1. Système de transport d'une salle d'expédition, pour transporter un flux de signatures, dans une salle d'expédition, présentant les caractéristiques suivantes :
une pluralité de preneurs (6) ;
un système à rail (4) pour le guidage de la pluralité de preneurs (6) ;
un système d'entraînement linéaire (8) électrique pour l'entraînement individuel des preneurs (6) dans le système à rail (4) ;
un système de commande (50), relié au système d'entraînement linéaire (8) pour la commande individuelle du déplacement de la pluralité de preneurs (6) dans le système à rail (4) ;
des bandes à haute vitesse (14) pour le transport des signatures (2) vers les preneurs (6),
**caractérisé en ce que**
le système à rail (4) est disposé par rapport aux bandes à haute vitesse (14) de manière que les preneurs (6) pénètrent dans des intervalles (22) formés entre les bandes à haute vitesse (14), tandis que les preneurs (6) continuent à être déplacés le long du système à rail (4).

2. Dispositif selon la revendication 1, **caractérisé en ce que** le système de commande (50) commande le déplacement des preneurs (6) après leur pénétration dans les intervalles (22) existants entre les bandes à haute vitesse (14), de manière que la vitesse de chaque preneur (6) soit augmentée jusqu'à ce que celui-ci ait saisi le bord arrière d'une signature (2).

3. Dispositif selon la revendication 2, **caractérisé en ce que** le système de commande (50) diminue la vitesse des preneurs (6), après que ceux-ci aient saisi le bord arrière des signatures (2).

4. Dispositif selon la revendication 1, **caractérisé en ce que** le système de commande (50) commande le déplacement des preneurs (6) après leur pénétration dans les intervalles existant entre les bandes à haute vitesse (14), de manière que la vitesse de chaque preneur (6) soit diminuée jusqu'à ce que celui-ci ait saisi le bord arrière d'une signature (2).

5. Dispositif selon la revendication 4, **caractérisé en ce que** la vitesse des preneurs (6) est diminuée de manière que celle-ci soit inférieure à la vitesse des bandes à haute vitesse (14), après que les preneurs (6) aient saisi chaque fois le bord avant respectif des signatures (2).

6. Dispositif selon l'une des revendications 1 à 5, **caractérisé en ce qu'**un poste de réception (16), auquel les signatures (2) sont transportées par les preneurs (6), est disposé en aval des bandes à haute vitesse (14).

7. Dispositif selon la revendication 6, **caractérisé en ce que** le système de commande (50) diminue la vitesse des preneurs (6) pendant leur avancement le long d'un premier tronçon de transport (18) situé entre les bandes à haute vitesse (14) et le poste de réception (16).

8. Dispositif selon la revendication 7, **caractérisé en ce qu'**en aval du premier tronçon de transport (18) se trouve un deuxième tronçon de transport (24), dans lequel le système à rail (4) est disposé de manière que les preneurs (6) soient levés pendant la continuation de leur déplacement le long du deuxième dispositif de transport (24).

9. Dispositif selon la revendication 8, **caractérisé en ce qu'**entre le deuxième dispositif de transport (24) et les bandes à haute vitesse (14) se trouve un troisième tronçon de transport (26) dans lequel le système à rail (6) - en observant dans la direction de déplacement des preneurs - s'étend obliquement vers le bas, de manière que les preneurs (6) soient avancés sous l'effet de la gravité, le long du troisième tronçon de transport (26).

10. Dispositif selon l'une des revendications précédentes, **caractérisé en ce que** le système d'entraînement linéaire (8) comprend une pluralité de bobines (10) électromagnétiques, disposées le long du système à rail (4) et pouvant être commandées individuellement par le système de commande (50).

11. Dispositif selon la revendication 10, **caractérisé en ce que** les preneurs (6) sont munis d'aimants coopérant pour l'entraînement des preneurs (6) avec le champ électromagnétique produit par les bobines (10) électromagnétiques.

12. Dispositif selon la revendication 10 ou 11, **caractérisé en ce que** le système de commande (50) comprend une pluralité de microcontrôleurs (30), dont chacun est associé à l'une des bobines électromagnétiques, et **en ce qu'**un contrôleur maître (40) est prévu, commandant la pluralité des microcontrôleurs (30).

13. Dispositif selon la revendication 12, **caractérisé en ce que** chacun des microcontrôleurs (30) est relié aux bobines (10) électromagnétiques, par un convertisseur numérique-analogique (32) et par un circuit électrique présentant un branchement en pont de Wheatstone.

14. Dispositif selon la revendication 13, **caractérisé en ce que** le circuit en pont de Wheatstone comprend une paire de transistors reliés électriquement à une source de courant continu (36) et au convertisseur numérique-analogique (32).

15. Dispositif selon l'une des revendications précédentes, **caractérisé en ce que** le système de commande (50) comprend un premier capteur (42) pour appréhender le déplacement des preneurs (6) dans le système à rail (4).

16. Dispositif selon l'une des revendications précédentes, **caractérisé en ce que** le système de commande (50) comprend un deuxième capteur (44) pour appréhender le déplacement des signatures (2).

17. Dispositif selon la revendication 16, **caractérisé en ce que** le système de commande (50) produit un signal de position de signature, d'après un signal de sortie du deuxième capteur (44).

18. Dispositif selon la revendication 17, **caractérisé en ce que** le système de commande (50) produit un signal de vitesse de signature, d'après un signal de sortie du deuxième capteur (44).

19. Dispositif selon l'une des revendications 16 à 18, **caractérisé en ce que** le deuxième capteur (44) comprend un photo-détecteur (44a) et une source de lumière (44b) associée, qui dirige de la lumière sur le photo-détecteur (44a), le photo-détecteur (44a) et la source de lumière (44b) étant disposés de manière que les signatures (2) soient transportées entre le photo-détecteur et la source de lumière (44b).

20. Dispositif selon l'une des revendications 16 à 19, **caractérisé en ce que** le système de commande (50) comprend un convertisseur analogique-numérique (46), convertissant en signaux numériques les signaux fournis par le deuxième capteur (44).

21. Dispositif selon l'une des revendications précédentes, **caractérisé en ce que** le système d'entraînement linéaire (8) électrique est un système d'entraînement synchrone.

22. Dispositif selon l'une des revendications 1 à 20, **caractérisé en ce que** le système d'entraînement linéaire (8) électrique est un système d'entraînement asynchrone.

23. Dispositif selon l'une des revendications 11 à 22, **caractérisé en ce que** le système de commande (50) comprend un système de récupération d'énergie, qui récupère au freinage des preneurs (6) l'énergie électrique produite par les aimants montés dans les bobines (10).
